# EUROPÄISCHE PATENTSCHRIFT

(11) **EP 3 393 875 B1**
(45) Veröffentlichungstag und Bekanntmachung des Hinweises auf die Patenterteilung: **13.03.2019**
(21) Anmeldenummer: 17734688.9
(22) Anmeldetag: 23.06.2017
(51) Int. Cl.: B60W 30/10, B60W 30/16, G06K 9/62, G06K 9/00, B60W 40/04

(54) **VERFAHREN ZUM VERBESSERTEN ERKENNEN VON OBJEKTEN DURCH EIN FAHRERASSISTENZSYSTEM**
METHOD FOR THE IMPROVED DETECTION OF OBJECTS BY A DRIVER ASSISTANCE SYSTEM
PROCÉDÉ DE DÉTECTION AMÉLIORÉE D'OBJETS AU MOYEN D'UN SYSTÈME D'AIDE À LA CONDUITE

(30) Priorität: 06.07.2016 DE 102016008218
(43) Veröffentlichungstag der Anmeldung: 31.10.2018
(73) Patentinhaber: Audi AG, 85045 Ingolstadt (DE)
(72) Erfinder: BRUNS, Erich, 85053 Ingolstadt (DE); JARVERS, Christian, 86159 Augsburg (DE)
(86) Internationale Anmeldenummer: PCT/EP2017/065563
(87) Internationale Veröffentlichungsnummer: WO 2018/007171

(56) Entgegenhaltungen:
- DE-A1- 19 926 559
- DE-A1-102008 001 256
- DE-A1-102013 012 781
- DE-A1-102014 106 506

## Beschreibung

Die Erfindung betrifft ein Verfahren zum Betreiben eines Fahrerassistenzsystems eines Kraftfahrzeugs, um ein Erkennen von Objekten durch das Fahrerassistenzsystem zu verbessern.

In modernen Kraftfahrzeugen basieren viele Funktionen von Fahrerassistenzsystemen für pilotiertes, also autonomes oder teilautonomes Fahren auf maschinellem Lernen. Für das Anlernen des jeweiligen Fahrerassistenzsystems sind entsprechend große Datenmengen beziehungsweise Datensätze erforderlich. Virtuell erzeugte, also simulierte Daten oder Sensordaten stellen für das maschinelle Lernen eine günstigere und umfassende Alternative zu der sonst erforderlichen manuellen Aufbereitung aufgezeichneter, also gemessener realer Daten oder Sensordaten dar. Zudem ist eine manuelle Aufbereitung oder Generierung von Daten für einige Zieldaten bzw. Zielszenarios, zum Beispiel eine Straßenkrümmung, kaum umsetzbar. Allerdings können sich simulierte Daten aufgrund von Unvollkommenheiten des zugrundeliegenden Simulationsprozesses systematisch von realen oder gemessenen Daten unterscheiden. Ein Algorithmus oder Klassifikationsalgorithmus, der ausschließlich mit simulierten Daten trainiert wird, wird daher bei der Anwendung, das heißt seinem Verwenden oder Nutzen zum Erkennen von Objekten, welche durch die Sensordaten repräsentiert werden, auf reale Daten eine verringerte Leistung, das heißt eine verringerte Erkennungsrate zeigen. Dadurch wird die Verwendbarkeit der simulierten Daten für das Verbessern der entsprechenden Algorithmen über maschinelles Lernen beeinträchtigt.

In diesem Zusammenhang offenbart die DE 10 2013 012 781 A1 ein Verfahren zum Trainieren eines Algorithmus zum Erkennen von vorbestimmten Mustern in Bilddaten, welche mittels einer Kamera eines Kraftfahrzeugs bereitgestellt werden.

Die DE 10 2013 018 543 offenbart ein Fahrerassistenzsystem für ein Fahrzeug mit einer Aufnahmeeinheit, einer Berechnungseinheit und einer Wiedergabeeinheit. Die Berechnungseinheit ist dabei zum Auswerten von Daten der Aufnahmeeinheit geeignet und nutzt hier auch einen lernenden Algorithmus.

Die DE 10 2014 106 506 A1 offenbart ein Verfahren zum Durchführen einer Diagnose eines Kamerasystems eines Kraftfahrzeugs, bei welchem ein detektiertes fahrzeugexternes Objekt auf zwei verschiedene Weisen klassifiziert wird und die jeweiligen Klassifizierungsergebnisse zum Durchführen der Diagnose verglichen werden.

Die DE 10 2008 001256 A1 betrifft ein Verkehrsobjekt-Erkennungssystem, ein Verfahren zum Erkennen eines Verkehrsobjekts und ein Verfahren zum Einrichten eines Verkehrsobjekt-Erkennungssystems, wobei zu Sensordaten korrespondierende Bedeutungsinformationen generiert werden.

Es ergibt sich die Aufgabe, ein Erkennen von Objekten, welche durch gemessene Sensordaten repräsentiert werden, durch ein Fahrerassistenzsystem eines Kraftfahrzeugs zu verbessern, also insbesondere eine entsprechende Erkennungsrate des Fahrerassistenzsystems zu erhöhen.

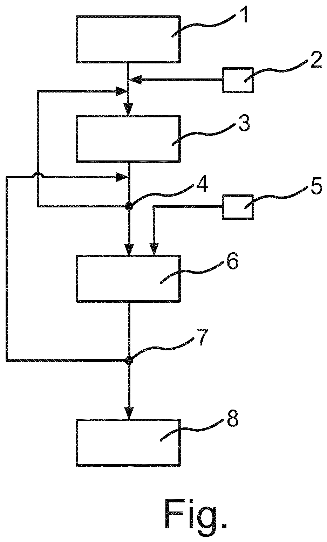

Diese Aufgabe wird durch den Gegenstand des unabhängigen Patentanspruchs gelöst. Vorteilhafte Ausführungen ergeben sich aus den abhängigen Patentansprüchen, der Beschreibung und der Figur.

Die Erfindung betrifft ein Verfahren zum Betreiben eines Fahrerassistenzsystems eines Kraftfahrzeugs. Das Verfahren umfasst dabei eine Reihe von Schritten.

Ein Schritt ist das Erfassen eines ersten Datensatzes von durch eine Sensoreinrichtung des Fahrerassistenzsystems gemessenen, also realen Sensordaten mit fehlender oder insbesondere ohne Klassenzugehörigkeitsinformation. Der erste Datensatz umfasst also eine Vielzahl von gemessenen Sensordaten. Dabei weisen die Sensordaten jeweils eine fehlende oder jeweils keine Klassenzugehörigkeitsinformation auf. Die Klassenzugehörigkeitsinformation, die auch als sogenanntes Label bezeichnet werden kann, betrifft dabei die von den Sensordaten repräsentierten Objekte. Bei diesen Objekten kann es sich insbesondere um fahrzeugexterne Objekte oder Fahrsituationen handeln. Ein Label kann beispielsweise angeben, das ein in den Sensordaten repräsentiertes Objekt ein Verkehrsschild ist. Es kann auch eine weitere Information enthalten und zum Beispiel einen Bildbereich bestimmen, in welchem das entsprechende Objekt, hier das Verkehrsschild, angeordnet ist. Ein mögliches Label für Sensordaten einer Kamera ist also beispielsweise: "Vorfahrt-gewähren-Schild im oberen rechte Bildviertel"

Ein nächster Schritt ist ein Vortrainieren eines Klassifizierungsalgorithmus des Fahrerassistenzsystems unter Berücksichtigung des ersten Datensatzes zum Verbessern einer Objektunterscheidung oder Objektklassifizierung des Klassifizierungsalgorithmus. Insbesondere kann dieses Vortrainieren auch durch eine Steuereinrichtung des Fahrerassistenzsystems erfolgen. Ziel hierbei ist es, eine Repräsentation zur erlernen, die bezüglich der statistischen Eigenschaften der Daten sinnvoll und stabil ist. Ein Beispiel ist ein Auffinden von Kanten und Objektgrenzen. Eine im Vortrainieren erlernte Repräsentation kann also zum Beispiel eine geometrische Grundform wie ein Kreis, ein Dreieck oder dergleichen sein. In dem obigen Beispiel eines Verkehrsschildes könnte eine Repräsentation für das Verkehrsschild somit durch die Grundform "Dreieck", oder "Dreieck mit nach unten orientierter Spitze" erlernt werden. Dies ist für das spätere Austrainieren hilfreich, wenn zum Beispiel die Bedeutung von Objekten wie Verkehrszeichen erkannt werden soll. Ziel ist hier also das Erlernen einer Repräsentationsweise oder mehrerer Repräsentationsmöglichkeiten von Objekten in den Sensordaten durch den Klassifizierungsalgorithmus.

Ein anderer Schritt ist ein Generieren eines zweiten Datensatzes von simulierten, also virtuellen Sensordaten mit zumindest einer jeweiligen Klassenzugehörigkeitsinformation gemäß einer vorgegebenen Simulationsvorschrift. Ein darauffolgender weiterer Schritt ist ein Austrainieren des Klassifizierungsalgorithmus des Fahrerassistenzsystems unter Berücksichtigung des zweiten Datensatzes zum Verbessern einer Eigenschaftszuordnung oder Eigenschaftsklassifizierung des Klassifizierungsalgorithmus, insbesondere für von dem Klassifizierungsalgorithmus unterschiedene, also klassifizierte oder zu klassifizierende, Objekte. Das Austrainieren erfolgt also nachdem das Vortraining abgeschlossen ist, das heißt zumindest einmal durchgeführt wurde. Ziel ist hier das Erlernen einer durch die Klassenzugehörigkeitsinformation für die unterschiedlichen Objekte vorgegebene Zielaufgabe wie beispielsweise das Erlernen der Bedeutung eines bestimmten Verkehrszeichens oder eines Abstandes, welcher sich beispielsweise aus einem Wissen über normierte Standardgrößen von Verkehrsschildern ableiten lässt. So kann die Repräsentation eines Objektes, beispielsweise das oben genannte "Dreieck mit nach unten orientierter Spitze" mit der Bedeutung "Vorfahrt gewähren" verknüpft werden. Dadurch, dass die Repräsentation "Dreieck mit nach unten orientierter Spitze" über reale Daten gelernt wurde, ist auch die spätere Erkennungsrate für solche Objekte in einem realen Umfeld besonders hoch.

Insgesamt wird durch die Kombination von Vortrainieren und Austrainieren ein Erkennen oder Klassifizieren von Objekten durch das Fahrerassistenzsystem verbessert, welche durch gemessene weitere Sensordaten repräsentiert werden, welche mittels des Klassifizierungsalgorithmus nach dem Austrainieren analysiert werden. Mit anderen Worten wird ein Klassifizierungsraum des Klassifizierungsalgorithmus durch die Kombination von Vortrainieren und Austrainieren erweitert und/oder verfeinert. Dies kann durch ein Messen einer Erkennungsrate des Klassifizierungsalgorithmus und einen Vergleich mit der Erkennungsrate von entsprechenden bekannten Klassifizierungsalgorithmen überprüft werden.

Das Verfahren kann auch als Schritt ein Erkennen von Objekten, welche durch gemessene, also reale weitere Sensordaten repräsentiert werden, durch das Fahrerassistenzsystem des Kraftfahrzeugs unter Verwenden des Klassifizierungsalgorithmus umfassen.

Das hat den Vorteil, dass durch den Einfluss des Vortrainierens Lösungen, also Strukturen und/oder Wichtungen, für den Klassifizierungsalgorithmus gefunden werden, welche besser auf reale Daten generalisierbar sind. Durch das Vortrainieren wird so die Objektunterscheidung im Klassifizierungsalgorithmus derart in den Klassifizierungsalgorithmus eingeprägt, dass dieser in realen oder durch reale Sensordaten repräsentierte Objekte besser unterscheiden kann. Durch das Austrainieren mit simulierten Daten kann die Eigenschaftszuordnung des Klassifizierungsalgorithmus und möglicherweise auch die Objektunterscheidung des Klassifizierungsalgorithmus weiter verfeinert werden. Da durch das Vorlernen bereits ein guter, das heißt nah an realen Situationen liegender Ausgangspunkt, wie beispielsweise Ausgangslerngewichte, für das Austrainieren gelegt oder gesetzt sind, kann mit dem Austrainieren auch schneller oder genauer eine vorgegebene Zielaufgabe wie eine vorgegebene Erkennungsrate für vorgegebene Szenarien oder Objekte erreicht werden als in üblichen Verfahren.

Die erfindungsgemäße Kombination von Vortrainieren und Austrainieren kombiniert so in optimaler Weise die Vorteile der jeweils einzelnen unterschiedlichen Arten des Trainierens. Dadurch, dass der bereits vortrainierte Klassifizierungsalgorithmus Ausgangspunkt des Austrainierens ist, wird hier ein weiterer Mehrwert geschaffen. Durch das Austrainieren kann des Weiteren auch nicht nur die Eigenschaftszuordnung des Klassifizierungsalgorithmus verbessert werden, sondern auch ergänzend die Objektunterscheidung verfeinert werden. Beispielsweise kann so eine im Vortrainieren erfolgte Objektunterscheidung, welche zwischen runden und eckigen Objekten unterscheiden kann, dahingehend verfeinert werden, dass zum Beispiel runde Verkehrsschilder mit unterschiedlichen Vorgaben, beispielsweise unterschiedlichen Tempovorgaben, als unterschiedliches Objekt klassifiziert werden. Insgesamt wird so ein Klassifizierungsalgorithmus geschaffen, welcher mit vermindertem zeitlichem und finanziellem Aufwand Objekte, die in realen Sensordaten repräsentiert sind, besser erkennen kann und zugleich nahezu beliebig fein austrainierbar ist.

In einer vorteilhaften Ausführungsform ist vorgesehen, dass die gemessenen und/oder simulierten Sensordaten Bilddaten und/oder Abstandsdaten, insbesondere Radardaten und/oder Ultraschalldaten, und/oder akustische Daten, insbesondere aus dem für Menschen hörbaren Bereich, und/oder fahrzeuginterne Sensordaten, insbesondere eine Geschwindigkeit und/oder eine Rad- und/oder Motordrehzahl und/oder eine Längs- und/oder Querbeschleunigung oder dergleichen umfassen. Hieraus ergibt sich der Vorteil, dass Objekte, welche insbesondere fahrzeugexterne Objekte sind oder solche umfassen besonders zuverlässig erkannt werden können.

In einer weiteren Ausführungsform ist vorgesehen, dass das Vortrainieren, und insbesondere auch das Erfassen, wiederholt erfolgt und/oder das Austrainieren, und insbesondere auch das Generieren, wiederholt erfolgt. Die genannten Verfahrensschritte können also iterativ durchgeführt werden. Dabei kann sowohl das Vortrainieren mehrmals hintereinander als auch das Austrainieren mehrmals hintereinander wiederholt werden, als auch das Vortrainieren nochmals nach dem ein- der mehrmaligen Austrainieren erfolgen. Das hat den Vorteil, dass so besonders leicht eine vorgegebene Güte, also beispielsweise eine vorgegebene Erkennungsrate des Klassifzierungsalgorithmus erreicht werden kann. Überdies kann durch ein Ermitteln der Güte, wie beispielsweise der Erkennungsrate, ein jeweiliger Zwischen- oder Endstand des Algorithmus erfasst werden und beispielsweise bei einer unzufriedenstellenden Entwicklung, wie einer Verschlechterung der Erkennungsrate, nochmals auf das jeweils andere Training, also nach einem Austrainieren auf das Vortrainieren oder nach dem Vortrainieren auf das Austrainieren zurückgegriffen werden. Auch einem möglichen Entlernen kann so vorgebeugt werden.

In einer anderen vorteilhaften Ausführungsform ist vorgesehen, dass der Klassifizierungsalgorithmus dem Erkennen oder Klassifizieren von Objekten und/oder Fahrsituationen im Straßenverkehr durch die Fahrerassistenzvorrichtung dient. Es können somit die erkannten Objekte sowohl fahrzeugexterne Objekte als auch Fahrsituationen oder -szenarien im Straßenverkehr sein. Bei den zu erkennenden Objekten kann es sich beispielsweise um Fahrzeuge oder auch Objekte wie Verkehrsschilder oder eine Spurmarkierung handeln. Das hat den Vorteil, dass die Fahrerassistenzeinrichtung einen Fahrer des entsprechenden Kraftfahrzeugs besonders gut unterstützen kann.

Es kann weiterhin vorgesehen sein, dass das Vortrainieren vor dem Austrainieren erfolgt. Insbesondere kann es zumindest einmal oder aber ausschließlich vor dem Austrainieren erfolgen. Das hat den Vorteil, dass der Klassifizierungsalgorithmus, welcher ja mit realen Sensordaten zu funktionieren hat, frühzeitig in die später gewünschte Richtung geprägt wird. Ein Ausbilden einer realitätsfremden Objektunterteilung durch das Trainieren des Klassifizierungsalgorithmus kann somit unterbunden werden.

Es ist vorgesehen, dass das Vortrainieren einen unüberwachten Lernprozess umfasst. Insbesondere umfasst das Vortrainieren auch keinen überwachten Lernprozess. Der unüberwachte Lernprozess nutzt dabei insbesondere Algorithmen des Tiefenlernens, des sogenannten Deep Learning, und des Repräsentationslernens, des sogenannten Representation Learning. Das hat den Vorteil, dass das Unterscheiden der Objekte gelernt werden kann, ohne jeweils für die unterschiedlichen Objekte vorab spezifische Eigenschaften kennen oder vorgeben zu müssen. Somit müssen die realen Sensordaten nicht manuell aufbereitet werden und beispielsweise in aufwändiger Handarbeit mit Klassenzugehörigkeitsinformationen versehen werden. Erreicht wird somit ein "eigenschaftsfreies Unterscheiden" des Klassifizierungsalgorithmus, welcher die Objekte basierend auf Korrelationen unterscheiden kann. Der Klassifizierungsalgorithmus kann dabei jedoch noch keine Aussage oder über entsprechende für einen Eingriff oder das Funktionieren des Fahrerassistenzsystems relevante Eigenschaften, wie beispielsweise eine Bedeutung oder einen Abstand eines Objektes, treffen.

Es ist vorgesehen, dass das Austrainieren einen überwachten Lernprozess umfasst. Insbesondere kann der überwachte Lernprozess ein Gradientenverfahren nutzen. Das hat den Vorteil, dass durch ein Vorgeben von Eigenschaften der entsprechenden Objekte als Erkennungsziel für das Lernen eine Richtung vorgegeben wird. Diese Richtung kann mit minimalem manuellen Aufwand durch die virtuellen Sensordaten nach einer Feinvorgabe vorgegeben werden.

In einer anderen Ausführungsform ist vorgesehen, dass der erste Datensatz vor dem Vortrainieren mit simulierten Sensordaten erweitert oder ergänzt wird. Das hat den Vorteil, dass auch in den realen Daten nicht enthaltene Szenarien oder Objekte bei dem Vortrainieren berücksichtigt werden. So können beispielsweise seltene, aber wichtige Ereignisse oder Objekte künstlich eingefügt werden und damit beispielsweise ein Aufwand für das Erfassen des ersten Datensatzes reduziert werden. Die simulierten Sensordaten machen dabei im ersten Datensatz bevorzugt nicht mehr als 40, besonders bevorzugt nicht mehr als 20 oder nicht mehr als 10 oder 5 Prozent der Gesamtsensordaten aus. Damit wird vermieden, dass Unvollkommenheiten des Simulationsprozesses das Vortrainieren in einer Weise beeinflussen, welche das Erkennen von Objekten verschlechtert.

In einer besonders vorteilhaften Ausführungsform ist vorgesehen, dass der Klassifizierungsalgorithmus auf einem neuronalen Netz basiert. Das hat den Vorteil, dass sowohl das Vortrainieren als auch das Austrainieren besonders leicht realisiert werden kann und hier auf eine Vielzahl von bewährten unüberwachten und überwachten Lernalgorithmen zurückgegriffen werden kann. Überdies kann so ein dem menschlichen Empfinden und Verhalten besonders nahekommendes Klassifizierungs- beziehungsweise Erkennungsverhalten erzielt werden.

Hierbei kann vorgesehen sein, dass das Vortrainieren nur eine erste Teilmenge des neuronalen Netzes betrifft und das Austrainieren eine größere zweite Teilmenge des neuronalen Netzes oder das neuronale Netz insgesamt betrifft. Beispielsweise kann die erste Teilmenge mit unüberwachten Lernmethoden als Denoising Auto Encoder trainiert werden. Die größere zweite Teilmenge kann beispielsweise mit dem Gradientenverfahren austrainiert werden. Damit kann der insgesamt erforderliche zeitliche Aufwand für das Trainieren des neuronalen Netzes verringert werden, ohne dass dabei eine Genauigkeit im Erkennen der Objekte verschlechtert würde.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand einer schematischen Zeichnung näher erläutert. Dabei zeigt die einzige Figur ein schematisches Flussdiagramm einer beispielhaften Ausführungsform eines Verfahrens zum verbesserten Erkennen von Objekten durch ein Fahrerassistenzsystem.

In dem gezeigten Verfahren ist ein erster Schritt ein Erfassen 1 eines ersten Datensatzes von gemessenen Sensordaten durch eine Sensoreinrichtung eines Fahrerassistenzsystems. Beispielsweise kann es sich bei den Sensordaten um Bilddaten einer Kamera des Kraftfahrzeugs handeln, welche an das Fahrerassistenzsystem übermittelt werden. Dabei umfasst der erste Datensatz im gezeigten Beispiel nur die Bilddaten ohne eine weitere Information über die in den Bilddaten repräsentierten Objekte in der Umgebung des Kraftfahrzeugs. Dem Fahrerassistenzsystem werden also vorliegend nur Bilder übermittelt. In eine nächsten Schritt, dem Erweitern 2, werden nun vorliegend dem ersten Datensatz zusätzlich zu den gemessenen realen Sensordaten noch simulierte Sensordaten beigefügt. Auch die simulierten Sensordaten weisen im gezeigten Beispiel keine Klassenzugehörigkeitsinformation über repräsentierte Objekte in den Sensordaten auf, könnten dies jedoch in einer anderen Ausführungsform.

Ein nächster Schritt ist hier das Vortrainieren 3 eines Klassifizierungsalgorithmus des Fahrerassistenzsystems unter Berücksichtigung des ersten erweiterten Datensatzes zum Verbessern einer Objektunterscheidung des Klassifizierungsalgorithmus. Dies erfolgt vorliegend mittels eines unüberwachten Lernprozesses und hat das Ziel, eine Repräsentation der Sensordaten zu erlernen, welche bezüglich der statistischen Eigenschaften der Sensordaten stabil ist. Hier kann beispielsweise ein Auffinden von Kanten und Objektgrenzen gelernt werden.

Nach dem Vortrainieren 3 erfolgt ein Überprüfen 4, hier der Güte des Klassifizierungsalgorithmus, beispielsweise über ein Messen einer Erkennungsrate. Genügt der Algorithmus einem vorgegebenen Gütekriterium nicht, so wird das Vortrainieren 3 vorliegend wiederholt.

Genügt der Klassifizierungsalgorithmus dem Gütekriterium, so kann nach einem Generieren 5 eines zweiten Datensatzes von simulierten Sensordaten ein Austrainieren 6 des Klassifizierungsalgorithmus unter Berücksichtigung des zweiten Datensatzes erfolgen. In dem Generieren 5 werden hier simulierte Sensordaten generiert, welche jeweils zumindest eine entsprechende Klassenzugehörigkeitsinformation gemäß einer vorgegebenen Vorschrift aufweisen. So ist beispielsweise eine simulierte Bilddatei versehen mit Koordinaten von darin repräsentierten Objekten und weiteren Informationen bezüglich der Art und Eigenschaft der jeweiligen, in unterschiedlichen Bildbereichen vorhandenen Objekte. Diese Klassenzugehörigkeitsinformation wird dann beim Austrainieren 6 im gezeigten Beispiel mittels eines überwachten Lernprozesses zum Verbessern einer Eigenschaftszuordnung des Klassifizierungsalgorithmus für von dem Klassifizierungsalgorithmus unterschiedene Objekte genutzt. Nach dem Austrainieren 6 erfolgt im gezeigten Beispiels ein weiteres Überprüfen 7 der Güte des Klassifizierungsalgorithmus. Entspricht die Güte dem vorgegebenen Gütekriterium, so wird vorliegend ein Erkennen 8 von Objekten, welche in weiteren Sensordaten repräsentiert werden, durch das Fahrerassistenzsystem durchgeführt. Liefert das weitere Überprüfen 7 ein negatives Ergebnis, so erfolgt im gezeigten Beispiel zunächst nochmals das Überprüfen 4 mit den oben genannten bekannten Konsequenzen, also gegebenenfalls einem Wiederholen des Vortrainierens 3. Alternativ kann vorgesehen sein, dass ein negatives Überprüfungsergebnis in dem Schritt des weiteren Überprüfens 7 nur zu einem nochmaligen Wiederholen des Austrainierens 6 führt.

Es kann auch vorgesehen sein, dass vor einem jeweiligen Wiederholen des Vortrainierens 3 oder des Austrainierens 6 nochmals entsprechend ein Erfassen 1 oder Generieren 5 der jeweiligen Datensätze, welche für das Trainieren verwendet werden, erfolgt.

## Patentansprüche

1. Verfahren zum Betreiben eines Fahrerassistenzsystems eines Kraftfahrzeugs, mit den Schritten:
- Erfassen (1) eines ersten Datensatzes von durch eine Sensoreinrichtung des Fahrerassistenzsystems gemessenen Sensordaten mit fehlender Klassenzugehörigkeitsinformation, wobei die Klassenzugehörigkeitsinformation die von den Sensordaten repräsentierten Objekte betrifft;
- Vortrainieren (3) eines Klassifizierungsalgorithmus' des Fahrerassistenzsystems unter Berücksichtigung des ersten Datensatzes zum Verbessern einer Objektunterscheidung des Klassifizierungsalgorithmus', wobei das Vortrainieren (3) einen unüberwachten Lernprozess umfasst;
- Generieren (5) eines zweiten Datensatzes von simulierten Sensordaten mit zumindest einer jeweiligen Klassenzugehörigkeitsinformation gemäß einer vorgegebenen Vorschrift;
- Austrainieren (6) des Klassifizierungsalgorithmus' des Fahrerassistenzsystems unter Berücksichtigung des zweiten Datensatzes zum Verbessern einer Eigenschaftszuordnung des Klassifizierungsalgorithmus' für von dem Klassifizierungsalgorithmus unterschiedene Objekte, wobei das Austrainieren (6) einen überwachten Lernprozess umfasst;
um ein Erkennen (8) von Objekten, welche durch gemessene weitere Sensordaten repräsentiert werden, durch das Fahrerassistenzsystem zu verbessern.

2. Verfahren nach Anspruch 1, wobei
die Sensordaten Bilddaten und/oder Abstandsdaten und/oder akustische Daten und/oder fahrzeuginterne Sensordaten umfassen.

3. Verfahren nach einem der vorhergehenden Ansprüche, wobei das Vortrainieren (3), und insbesondere auch das Erfassen (1), wiederholt erfolgt und/oder das Austrainieren (6), und insbesondere auch das Generieren (5), wiederholt erfolgt.

4. Verfahren nach einem der vorhergehenden Ansprüche, wobei der Klassifizierungsalgorithmus dem Erkennen (8) von Objekten und/oder Fahrsituationen im Straßenverkehr durch die Fahrerassistenzeinrichtung dient.

5. Verfahren nach einem der vorhergehenden Ansprüche, wobei das Vortrainieren (3) vor dem Austrainieren (6) erfolgt.

6. Verfahren nach einem der vorhergehenden Ansprüche, wobei das Vortrainieren (3) einen unüberwachten Lernprozess umfasst, der Algorithmen des Tiefenlernens und/oder des Repräsentationslernens nutzt.

7. Verfahren nach einem der vorhergehenden Ansprüche, wobei das Austrainieren (6) einen überwachten Lernprozess umfasst, der ein Gradientenverfahren nutzt.

8. Verfahren nach einem der vorhergehenden Ansprüche, wobei der erste Datensatz vor dem Vortrainieren (3) mit simulierten Sensordaten erweitert wird.

9. Verfahren nach einem der vorhergehenden Ansprüche, wobei der Klassifizierungsalgorithmus auf einem neuronalen Netz basiert.

10. Verfahren nach Anspruch 9, wobei
das Vortrainieren (3) nur eine erste Teilmenge des neuronalen Netzes betrifft und das Austrainieren (6) eine größere zweite Teilmenge des neuronalen Netzes oder neuronale Netz insgesamt.

## Claims

1. Method for operating a driver assistance system of a motor vehicle, having the steps:
- collecting (1) a first data set from sensor data, having missing class membership information, measured by a sensor device of the driver assistance system, wherein the class membership information concerns the objects represented by the sensor data:
- pre-training (3) a classification algorithm of the driver assistance system under consideration of the first dataset for the improvement of an object differentiation of the classification algorithm, wherein the pre-training (3) comprises an unsupervised learning process;
- generating (5) a second dataset of simulated sensor data having at least one respective class membership information item according to a predetermined rule;
- training out (6) the classification algorithm of the driver assistance system under consideration of the second dataset for the improvement of a characteristic assignment of the classification algorithm for objects differentiated by the classification algorithm, wherein the training out (6) comprises a supervised learning process;
in order to improve a recognition (8) by the driver assistance system of objects which are represented by measured further sensor data.

2. Method according to claim 1, wherein
the sensor data comprise picture data and/or distance data and/or acoustic data and/or vehicle internal sensor data.

3. Method according to any of the preceding claims, wherein
the pre-training (3) and in particular also the collecting (1) takes place repeatedly and/or the training out (6) and in particular also the generating (5) takes place repeatedly.

4. Method according to any of the preceding claims, wherein
the classification algorithm serves for the recognition (8) of objects and/or drive situations in road traffic by means of the driver assistance device.

5. Method according to any of the preceding claims, wherein
the pre-training (3) occurs prior to the training out (6).

6. Method according to any of the preceding claims, wherein
the pre-training (3) comprises an unsupervised learning process, which uses algorithms of deep learning and/or of representation learning.

7. Method according to any of the preceding claims, wherein
the training out (6) comprises a supervised learning process which uses a gradient method.

8. Method according to any of the preceding claims, wherein
the first data set prior to the pre-training (3) is extended with simulated sensor data.

9. Method according to any of the preceding claims, wherein
the classification algorithm is based on a neuronal network.

10. Method according to claim 9, wherein
the pre-training (3) concerns only a first partial amount of the neuronal network and the training out (6) a larger second partial amount of the neuronal network or neuronal network in total.

## Revendications

1. Procédé servant à faire fonctionner un système d'assistance au conducteur d'un véhicule automobile, avec les étapes :
- de détection (1) d'un premier ensemble de données de données de capteur mesurées par un dispositif de capteur du système d'assistance au conducteur avec une information d'appartenance à une catégorie manquante, dans lequel l'information d'appartenance à une catégorie concerne les objets représentés par les données de capteur ;
- de pré-apprentissage (3) d'un algorithme de classification du système d'assistance au conducteur en tenant compte du premier ensemble de données pour améliorer une différenciation d'objet de l'algorithme de classification, dans lequel le pré-apprentissage (3) comprend un processus d'apprentissage non surveillé ;
- de génération (5) d'un deuxième ensemble de données de données de capteur simulées avec au moins une information d'appartenance à une catégorie respective selon une prescription prédéfinie ;
- d'apprentissage (6) de l'algorithme de classification du système d'assistance au conducteur en tenant compte du deuxième ensemble de données pour améliorer une attribution de propriétés de l'algorithme de classification pour des objets différentiés par l'algorithme de classification, dans lequel l'apprentissage (6) comprend un processus d'apprentissage surveillé ;
pour améliorer une identification (8) d'objets, lesquels sont représentés par d'autres données de capteur mesurées, par le système d'assistance au conducteur.

2. Procédé selon la revendication 1, dans lequel
les données de capteur comprennent des données d'image et/ou des données d'espacement et/ou des données acoustiques et/ou des données de capteur internes au véhicule.

3. Procédé selon l'une quelconque des revendications précédentes, dans lequel
le pré-apprentissage (3), et en particulier également la détection (1), est effectué de manière répétée, et/ou l'apprentissage (6), et en particulier également la génération (5), est effectué de manière répétée.

4. Procédé selon l'une quelconque des revendications précédentes, dans lequel
l'algorithme de classification sert à l'identification (8) d'objets et/ou de situations de conduite dans le trafic routier par le dispositif d'assistance au conducteur.

5. Procédé selon l'une quelconque des revendications précédentes, dans lequel
le pré-apprentissage (3) est effectué avant l'apprentissage (6).

6. Procédé selon l'une quelconque des revendications précédentes, dans lequel
le pré-apprentissage (3) comprend un processus d'apprentissage non surveillé, qui utilise des algorithmes de l'apprentissage approfondi et/ou de l'apprentissage de représentation.

7. Procédé selon l'une quelconque des revendications précédentes, dans lequel
l'apprentissage (6) comprend un processus d'apprentissage surveillé, qui utilise un procédé de gradient.

8. Procédé selon l'une quelconque des revendications précédentes, dans lequel
le premier ensemble de données est étendu avec des données de capteur simulées avant le pré-apprentissage (3).

9. Procédé selon l'une quelconque des revendications précédentes, dans lequel
l'algorithme de classification se base sur un réseau neuronal.

10. Procédé selon la revendication 9, dans lequel
le pré-apprentissage (3) ne concerne qu'une première quantité partielle du réseau neuronal, et l'apprentissage (6) une plus grande deuxième partie partielle du réseau neuronal ou des réseaux neuronaux au total.
